# FASCICULE DE BREVET EUROPEEN

(11) **EP 1 845 685 B1**
(45) Date de publication et mention de la délivrance du brevet: **27.06.2012**
(21) Numéro de dépôt: 06300352.9
(22) Date de dépôt: 11.04.2006
(51) Int. Cl.: H04L 29/06

(54) **Transmission perfectionnée de paquets IP de contenus, par adjonction à ces paquets IP de données d'information relatives aux contenus**
Optimierte Übertragung von Inhalt-IP-Paketen durch das Hinzufügen von Informationsangaben bezüglich des Inhalts von diesen IP-Paketen
Optimised transmission of content IP packets by adding to the IP packets content-related information

(43) Date de publication de la demande: 17.10.2007
(73) Titulaire: Alcatel Lucent, 75007 Paris (FR)
(72) Inventeur: Roullet, Laurent, 31500, TOULOUSE (FR); Chuberre, Nicolas, 31820, PIBRAC (FR)
(74) Mandataire: Nicolle, Olivier

(56) Documents cités:
- US-A1- 2004 010 802
- US-A1- 2005 190 774
- WENGER M M HANNUKSELA T STOCKHAMMER M WESTERLUND D SINGER S: "RTP Payload Format for H.264 Video; rfc3984.txt;" IETF STANDARD, INTERNET ENGINEERING TASK FORCE, IETF, CH, février 2005 (2005-02), pages 1-83, XP015009755 ISSN: 0000-0003
- NAFAA ET AL.: "Joint loss pattern characterization and unequal interleaved FEC protection for robust H.264 video distribution over wireless LAN" COMPUTER NETWORKS, ELSEVIER SCIENCE PUBLISHERS B.V., AMSTERDAM, NL, vol. 49, no. 6, 19 décembre 2005 (2005-12-19), pages 766-786, XP005105124 ISSN: 1389-1286

## Description

L'invention concerne le domaine de la transmission de contenus, de type multimédia, via un réseau de communication, et plus précisément la diffusion de contenus multimédia entre un serveur de contenus et des récepteurs de contenus, via un réseau de communication adapté à la diffusion de contenus multimédia.

On entend ici par « contenu multimédia » des ensembles de données d'un même type, comme par exemple des fichiers de données (ou « data » en anglais) ou des vidéos. D'une manière générale, un ensemble de données constitue ce que l'homme de l'art appelle en anglais ADU (pour « Application Data Unit » - unité de données d'application). Par exemple, un ensemble de données d'un fichier de données constitue un segment de ce fichier, et un ensemble de données d'une vidéo constitue une trame de type I, B ou P, d'une couche principale (ou de base) ou d'une couche d'augmentation (ou « enhanced layer » en anglais), d'une image de cette vidéo. Dans le domaine de la diffusion de contenus de type dit « rich media », les ensembles de données font partie d'un flux de type MPEG-4 et peuvent constituer une scène interactive avec laquelle l'utilisateur peut interagir (ou s'interfacer). Cette scène est habituellement transmise parallèlement au flux vidéo « envoyé en mode streaming » selon la norme BIFS (« Binary Format for Scènes » - format binaire pour des contenus audiovisuels bi ou tridimensionnels reposant sur VRML et la partie n°11 du standard MPEG-4). Il est rappelé qu'une scène BIFS est constituée d'unités de commandes d'accès BIFS (jeux de commandes et de temps de présentation), qui résultent en un flux (« stream ») BIFS. Lancer un flux BIFS consiste à appliquer à la scène les modifications qui sont décrites dans les commandes BIFS puis à afficher le résultat sur le terminal de l'utilisateur. Comme dans le cas d'une vidéo, certaines commandes BIFS peuvent décrire une scène entière (laquelle peut alors être décodée sans connaissance des commandes BIFS précédentes, à l'image d'une trame de type I (en codage vidéo)), tandis que d'autres commandes permettent de modifier la scène existante, a l'image d'une trame de type P (en codage vidéo.

Par ailleurs, on entend ici par « réseau de communication adapté à la diffusion de contenus » :aussi bien un réseau satellitaire, comme par exemple un réseau SDMB (pour « Satellite Digital Multimedia Broadcast »), qu'un réseau terrestre éventuellement de type radio, comme par exemple un réseau UMTS apte à la diffusion (par exemple de type MBMS (pour « Multimedia Broadcast / Multicast Services ») ou DVB-H (pour « Digital Video Broadcasting - Handhelds » télévision mobile)), ou qu'un réseau hybride, c'est-à-dire à la fois satellitaire et terrestre, comme par exemple un réseau radio de type DVB-H adapté aux liaisons satellitaires).

Comme le sait l'homme de l'art, pour diffuser un contenu, par exemple une vidéo, entre un serveur de contenus et des récepteurs de contenus, on commence tout d'abord par générer dans le serveur de contenus un flux continu de trames IBP sous forme de paquets IP (Internet Protocol). Puis, on transmet ces paquets IP à un équipement d'encapsulation IP afin qu'il les encapsule dans des rafales (ou « bursts » en anglais) conformément au mode de transmission utilisé, par exemple le mode TDMA (« Time Division Multiple Access » - multiplexage temporel). Puis, on diffuse les rafales (contenant les paquets encapsulés) vers les récepteurs de contenus, via le réseau « de diffusion », afin qu'ils puissent reconstituer le contenu représenté par les paquets IP et soit stocker temporairement ce contenu reconstitué en vue d'une utilisation ultérieure par un lecteur de contenus (ou «player»), soit communiquer ce contenu reconstitué a un lecteur de contenus en vue d'une utilisation immédiate ou ultérieure.

Le document US 2004/0010802 A1 décrit un système d'encodage de données vidéo comprenant un encodeur vidéo, une couche d'adaptation générique générant à partir des données video encodées des unités de données dont le format est compatible avec une pluralité de systèmes de transport (dont IP ou MPEG-2), et une couche d'adaptation réseau correspondant à un format de transport déterminé, pour transcoder les unités de données audit format.

Le document US 2005/0190774 A1 décrit un procédé de conversion d'un flux de données portant des données multimédia encodées généré par un serveur de données multimédia en un flux adapté à la capacité et aux performances du canal de transmission et de l'équipement récepteur du flux transmis sur ledit canal.

Généralement, l'équipement d'encapsulation IP encapsule dans des rafales successives les paquets IP qu'il reçoit d'un ou plusieurs serveurs de contenus en fonction de leur ordre d'arrivée. Les types et/ou structures des différents contenus représentés par les paquets IP n'étant généralement pas distinguables au niveau IP mais plus généralement au niveau port ou RTP, l'encapsuation se fait indépendamment du type et/ou de la structure du ou des contenus au sein d'une même adresse IP. Il est toujours possible de différencier des flux par leur adresse IP, comme par exemple en envoyant les deux couches (principale et augmentée (ou améliorée)) sur deux adresses. IP au sein d'une même rafale. Outre que cela implique une contrainte sur l'encodeur et le plan d'adressage et donc requiert des tables de signalisation non négligeables, cela n'améliore pas le traitement de la rafale car on ne connaît toujours pas des informations comme le début ou la fin et on ne peut donc pas prendre de décision adaptée. Le seul intérêt réside dans le fait de pouvoir ajouter des données de redondance (données de FEC) de façon différentiée et de réaliser un entrelacement temporel. Il peut donc arriver qu'un contenu soit reparti sur plusieurs rafales séparées par un intervalle temporel relativement grand.

Or, dans certains modes de fonctionnement d'un récepteur de contenus ou du lecteur de contenus associé, comme par exemple en cas de changement de canal de programmes de télévision, cette séparation temporelle peut entraîner une augmentation du temps nécessaire à l'affichage d'une première image vidéo. En effet, lorsqu'un récepteur (ou lecteur) de vidéos change de canal il doit se synchroniser sur une nouvelle rafale, puis retrouver la première trame I valide, puis l'afficher, ce qui entraîne un retard cumulé égal à la somme du temps de synchronisation, du temps de réception de la première trame 1 valide, et du temps de décodage de cette dernière.

De la même façon, lorsqu'un récepteur de fichiers reçoit une rafale de données sur un canal, il doit se synchroniser sur cette rafale, puis collecter les paquets IP contenus dans cette rafale, puis effectuer un décodage de type EEC (« Forward Error Correction» - technique de correction d'erreur) ou MPE-FEC (dans le cas d'un réseau DVB-H) sur ces paquets IP afin de pouvoir corriger les erreurs éventuelles, puis de pouvoir reconstituer les segments de fichier qu'ils représentent, et enfin stocker les segments reconstitués sous la forme d'un fichier. Si un segment est distribué sur plusieurs rafales, et qu'il s'agit du dernier, voire même du seul, segment du fichier on doit attendre un intervalle au moins égal à la durée d'une rafale pour être en mesure de retrouver le segment et donc de former le fichier. Par ailleurs, si l'application de création du segment rajoute sa propre protection EEC à la protection MPE EEC du fichier initial, il en résulte une redondance et une perte de performance du fait que l'on doit rechercher les erreurs dans chaque rafale alors que la correction d'erreurs serait meilleure si elle était effectuée sur plusieurs rafales. Dans ce cas, il vaut donc mieux ne pas appliquer la protection (correction d'erreurs) au niveau MPE-FEC et se limiter à la protection FEC au niveau du serveur.

On notera également que dans les réseaux de diffusion de type radio, les taux d'erreur de paquet (PER) peuvent être élevés. Lorsque les erreurs portent sur des paquets IP qui représentent des ensembles de données de faible importance (par exemple des trames de type B), les conséquences sont limitées. Mais, lorsque les erreurs portent sur des paquets IP qui représentent des ensembles de données de forte importance (par exemple des trames de type I), cela peut avoir pour conséquence de rendre inutilisable plusieurs autres ensembles de données en réception (effet de cascade sur des trames complémentaires de types différents). Les techniques de correction d'erreur (de type EEC ou MPE-FEC) étant appliquées au niveau des équipements d'encapsulation IP sur des paquets IP qui ne distinguent pas les différences d'importance des ensembles de données qu'ils représentent, il n'est pas possible de faire varier leur efficacité en fonction de ces différences d'importance.

Pour réduire le taux d'erreur de paquet il est certes possible d'augmenter le taux (ou niveau) de correction d'erreur, mais cela a pour conséquence d'augmenter le nombre de données redondantes (dites « données de FEC ») et donc de consommer de la bande passante ce qui n'est pas recherché du fait qu'elle est limitée.

D'autres solutions de réduction du taux d'erreur peuvent être envisagées, comme par exemple effectuer une gestion de la qualité de service (QoS) de type bout-en-bout (ou « end-to-end»), ce qui nécessite une communication interactive entre le serveur et le client, ou analyser dans les équipements d'encapsulation IP les ensembles de données qui sont contenus dans les paquets IP, ce qui oblige l'encapsulateur IP à comprendre la sémantique de l'application, ce qui n'est pas aisé pour un équipement d'infrastructure de réseau (traitement plus important alors même que les débits sont grands) et difficile à maintenir (à chaque nouvelle application déployée il faut faire une mise à jour du logiciel). Mais, ces solutions induisent d'autres inconvénients qui les rendent difficiles, voire impossible, à mettre en oeuvre, ou qui ne permettent pas une standardisation du fait que leur mise en oeuvre varie d'un type de serveur à un autre.

Aucune solution connue n'apportant une entière satisfaction, l'invention a donc pour but d'améliorer la situation.

Elle propose à cet effet un équipement d'encapsulation IP, comprenant des moyens d'encapsulation chargés d'encapsuler dans des rafales des paquets IP, délivrés par au moins un serveur de contenus multimédia équipé d'un dispositif de traitement de paquets IP générés par un serveur de contenu(s) multimédia et représentant des ensembles de données multimédia, comprenant chacun des données de début et de fin et associés chacun au moins à un type, en vue de leur diffusion vers des équipements de réception via une réseau de communication.

Le dispositif de traitement comprend des moyens de traitement chargés d'adjoindre aux paquets IP qui sont générés par le serveur de contenus des données d'information qui définissent au moins partiellement l'ensemble de données qui est intégré dans ces paquets IP et/ou le contenu dont fait partie cet ensemble de données et/ou des informations relatives à la transmission du contenu et exploitables par le réseau, afin que le serveur puisse délivrer sur une sortie les paquets IP et les données d'information correspondantes.

Cet équipement d'encapsulation IP se caractérise par le fait qu'il comprend des moyens d'analyse chargés d'analyser des données d'information adjointes à des paquets IP reçus afin d'ordonner aux moyens d'encapsulation d'encapsuler certains au moins de ces paquets IP dans des positions choisies au sein des rafales en fonction des données d'information qui leur correspondent et afin que tous les paquets IP qui comportent les données d'un ensemble soient encapsulés dans une seule rafale (en faisant varier les éléments inclus dans cette rafale ou la taille de la rafale ou la protection (correction d'erreurs) à l'intérieur de la rafale).

L'équipement d'encapsulation IP selon l'invention peut comporter d'autres caractéristiques qui peuvent être prises séparément ou en combinaison, et notamment :
- ses moyens d'analyse peuvent être chargés d'établir des priorités de transmission entre paquets IP en fonction des données d'information correspondantes et d'ordonner aux moyens d'encapsulation d'encapsuler les paquets IP en fonction de ces priorités établies ;
- ses moyens d'analyse peuvent être chargés, en cas d'indisponibilité de l'intégralité des paquets IP correspondant à un ensemble de données associé à une priorité donnée, d'ordonner aux moyens d'encapsulation d'encapsuler des paquets IP correspondant à un ensemble de données associé à une priorité inférieure ;
- ses moyens d'analyse peuvent être chargés, en cas de disponibilité de l'intégralité des paquets IP correspondant à un ensemble de données, mais d'un manque de place dans une rafale en cours de constitution par les moyens d'encapsulation et partiellement remplie de paquets IP, d'ordonner aux moyens d'encapsulation d'extraire de la rafale en cours de constitution certains au moins des paquets IP déjà intégrés afin d'intégrer dans cette rafale en cours de constitution l'intégralité des paquets IP qui correspondent à cet ensemble de données, et de différer la transmission des paquets IP extraits :
- ses moyens d'analyse peuvent chargées d'ordonner aux moyens d'encapsulation d'extraire et de différer la transmission des paquets IP contenant des données redondantes de correction d'erreur ;
- ses moyens d'analyse peuvent être chargés d'ordonner aux moyens d'encapsulation de réduire temporairement la taille des rafales ;
- ses moyens d'analyse peuvent être chargés d'ordonner aux moyens d'encapsulation d'augmenter temporairement la taille des rafales ;
- ses moyens d'analyse peuvent être chargés, en cas de disponibilité de l'intégralité des paquets IP qui correspondent à un ensemble de données, mais d'un manque de place dans une rafale en cours de constitution par les moyens d'encapsulation et partiellement remplie de paquets IP, d'ordonner aux moyens d'encapsulation de supprimer de cette rafale en cours de constitution certains au moins des paquets IP déjà intégrés et/ou de réduire le niveau de correction d'erreur appliqué aux paquets IP encapsulés et/ou d'augmenter temporairement la taille des rafales, afin d'intégrer dans cette rafale en cours de constitution l'intégralité des paquets IP qui correspondent à cet ensemble de données ;
- ses moyens d'analyse peuvent être chargés d'ordonner aux moyens d'encapsulation d'augmenter le niveau de correction d'erreur qu'ils appliquent aux paquets IP encapsulés ;
   ➢ ses moyens d'analyse peuvent être chargés d'ordonner aux moyens d'encapsulation d'augmenter de façon dynamique le niveau de correction d'erreur (ou protection) qu'ils appliquent aux paquets IP encapsulés jusqu'à un seuil choisi ;
- ses moyens d'analyse peuvent être chargés d'ordonner aux moyens d'encapsulation d'appliquer aux paquets IP encapsulés dans une rafale un niveau de correction d'erreur qui varie en fonction des priorités qui leur sont associées ;
- ses moyens d'analyse peuvent être chargés d'ordonner aux moyens d'encapsulation d'appliquer le niveau de correction d'erreur le plus élevé aux paquets IP qui sont associés à la priorité la plus élevée ;
- ses moyens d'analyse peuvent être chargés d'ordonner aux moyens d'encapsulation de dupliquer des données, appartenant à certaines rafales définissant un même contenu et correspondant à une même catégorie, afin de les regrouper au sein d'une même rafale définissant ce contenu et associée à cette catégorie.

L'invention est particulièrement bien adaptée, bien que de façon non exclusive, aux réseaux de communication radio de types DVB-H (y compris les évolutions adaptées aux liaisons satellitaires). Mais, elle concerne également et non limitativement tout type de réseau de diffusion (« broadcast ») en mode TDMA (multiplexage temporel), ainsi que des réseaux IP/TDMA comme par exemple WiMax ou WiFi.

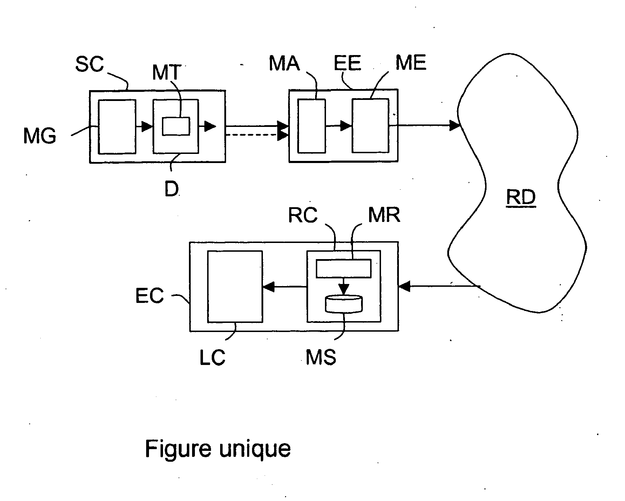

D'autres caractéristiques et avantages de l'invention apparaîtront à l'examen de la description détaillée ci-après, et du dessin annexé, sur lequel l'unique figure illustre de façon très schématique et fonctionnelle un serveur de contenus équipé d'un exemple de réalisation d'un dispositif de traitement selon l'invention, délivrant des flux continus de paquets IP pour un équipement d'encapsulation IP selon l'invention, connecté à un réseau de diffusion auquel est également connecté un équipement de communication comportant un récepteur de contenus et un lecteur de contenus.

Le dessin annexé pourra non seulement servir à compléter l'invention, mais aussi contribuer à sa définition, le cas échéant.

L'invention a pour objet de permettre l'optimisation de l'encapsulation de paquets IP, représentant des ensembles de données définissant des contenus multimédia, dans des rafales (ou bursts) destinées à être diffusées par un réseau de communication vers des équipements de communication disposant au moins d'un récepteur de contenus multimédia.

Dans ce qui suit, on considère à titre d'exemple non limitatif que le réseau de communication est un réseau radio cellulaire (ou mobile) de type UMTS/DVB-H (télévision mobile). Mais l'invention n'est pas limitée à ce type de réseau de communication. Elle concerne en effet tout réseau de communication, de préférence radio, capable de diffuser des contenus multimédia, qu'il soit de type satellitaire, comme par exemple un réseau SDMB, ou terrestre (éventuellement de type radio), comme par exemple un réseau UMTS/MBMS ou UMTS/DVB-H, ou encore hybride, c'est-à-dire à la fois satellitaire et terrestre, comme par exemple un réseau radio constituant une évolution du DVB-H selon les standards DVB Forum.

Par ailleurs, on considère dans ce qui suit que les équipements de communication (destinataires des contenus multimédias diffusés) sont des terminaux mobiles, comme par exemple des téléphones mobiles, équipés d'un récepteur de contenus multimédia et d'un lecteur de contenus multimédia. Mais l'invention n'est pas limitée à ce type d'équipement de communication. Elle concerne en effet tout type de terminal mobile (ordinateur portable ou assistant numérique personnel (ou PDA) communicant, notamment) ou fixe (ordinateur ou serveur, notamment), équipé d'un récepteur de contenus multimédia et d'un éventuel lecteur de contenus multimédia, et tout type de récepteur de contenus multimédia raccordable à un réseau de diffusion et destiné à alimenter en contenus multimédia diffusés un lecteur de contenus multimédia ou des moyens de stockage.

On a représenté sur l'unique figure une chaîne de transmission (diffusion) de contenus multimédia entre un serveur de contenus multimédia SC et des équipements de communication EC comportant un (ou se présentant sous la forme d'un) récepteur de contenus multimédia RC, via un équipement d'encapsulation IP EE et un réseau de diffusion RD (ici de type UMTS/DVB-H).

Il est tout d'abord rappelé qu'un serveur (de contenus multimédia) SC comprend un module de génération MG chargé de transformer des contenus multimédia en ensembles de données, puis d'intégrer ces ensembles de données dans des paquets IP, afin de délivrer en sortie des flux continus de paquets IP qui sont destinés à un équipement d'encapsulation IP EE.

On entend ici par ensemble de données ce que l'homme de l'art appelle en anglais ADU (Application Data Unit - unité de données d'application). Par exemple, un ensemble de données d'un fichier de données constitue un segment de ce fichier, et un ensemble de données d'une vidéo constitue une trame de type I, B ou P, d'une couche principale (ou de base) ou d'une couche d'augmentation (ou enhanced layer), d'une image de cette vidéo, ou un flux de type BIFS.

L'équipement d'encapsulation IP EE comprend un module d'encapsulation ME chargé d'encapsuler les paquets IP reçus dans des rafales (ou bursts) conformément au mode de transmission qui est utilisé par le réseau de diffusion RD auquel il est connecté. Ce mode de transmission est par exemple TDMA (Time Division Multiple Access - multiplexage temporel).

Les rafales (ici TDMA) sont ensuite transmises, selon des intervalles généralement réguliers, par l'équipement d'encapsulation IP EE au réseau de diffusion RD afin qu'il les diffuse vers les équipements de communication EC (ou les récepteurs de contenus RC).

Les récepteurs de contenus RC comportent par exemple un module de réception MR chargé de reconstituer chaque contenu diffusé au moyen des paquets IP encapsulés dans les rafales successivement reçues. Comme cela est illustré, les récepteurs de contenus RC peuvent également comporter un module de stockage MS (mémoire ou base de données) chargé de stocker au moins temporairement les contenus reconstitués par leur module de réception MR lorsqu'ils ne sont pas directement transmis à un lecteur de contenus (ou player) LC. Lorsque le récepteur de contenus RC ne comporte pas de module de stockage MS chaque contenu reconstitué par son module de réception MR est transmis soit à un module de stockage externe, en vue d'une utilisation ultérieure par un lecteur de contenus LC, soit communiqué à un lecteur de contenus LC en vue d'une utilisation immédiate ou ultérieure.

L'invention ne porte que sur les serveurs de contenus multimédia SC et sur les équipements d'encapsulation EE.

Plus précisément, l'invention propose tout d'abord d'équiper certains serveurs (de contenus multimédia) SC d'un dispositif de traitement D comprenant un module de traitement MT chargé d'adjoindre aux paquets IP, qui sont générés par le module de génération MG, des données d'information qui définissent au moins partiellement l'ensemble de données que chacun d'entre eux représente en partie et/ou le contenu dont fait partie cet ensemble de données et/ou des informations relatives à la transmission du contenu et exploitables par le réseau (c'est-à-dire toute information nécessaire aux équipements d'encapsulation EE pour optimiser leur travail (comme par exemple la priorité relative entre les différents trafics (ou flux), à l'image de la signalisation de la norme DIFFSERV qui utilise l'en-tête TOS (« Type Of Service ») pour permettre de gérer des priorités entre des flux simultanés (haute priorité / moyenne priorité / basse priorité)).

Ces données d'information peuvent être de tout type dès lors qu'elles sont de nature à permettre l'optimisation de la constitution des rafales (ici TDMA) de paquets IP au niveau de l'équipement d'encapsulation EE, compte tenu du ou des critères d'optimisation choisis. Il peut par exemple s'agir de données d'information signalant un paquet IP comportant les données du début ou de la fin d'un ensemble de données, ou le type d'un ensemble de données qui est en partie intégré dans un paquet IP, ou le type du contenu multimédia dont fait partie un ensemble de données qui est en partie intégré dans un paquet IP, ou encore les duplications de données à effectuer dans une rafale.

On notera que plusieurs données d'information peuvent être adjointes à un même paquet IP. Le nombre de données d'information adjointes à un paquet IP dépend du ou des critères d'optimisation choisis au niveau de l'équipement d'encapsulation EE et du type du contenu multimédia à diffuser.

Par exemple, lorsque le contenu multimédia est une vidéo, et donc que les ensembles de données sont des trames d'image vidéo, il est avantageux que le module de traitement MT adjoigne à des paquets IP qui représentent une trame vidéo des données d'information qui signalent au moins le type de cette trame vidéo (I, B ou P).

Il peut être également utile que le module de traitement MT adjoigne à des paquets IP qui représentent une trame vidéo des données d'information qui signalent le type de la couche à laquelle appartient la trame vidéo qu'ils représentent, c'est-à-dire s'il s'agit d'une couche principale (main layer) ou d'une couche d'augmentation (enhanced layer).

Il peut être également utile que le module de traitement MT adjoigne à un paquet IP qui représente le début ou la fin d'une trame vidéo des données d'information qui signalent ce début ou cette fin.

Il peut être également utile que le module de traitement MT adjoigne à des paquets IP qui représentent une trame vidéo des données d'information qui indiquent si les données des paquets IP doivent être dupliquées dans une rafale afin d'optimiser un temps de passage d'un canal de contenu à un autre (plus connu sous le mot anglais « zapping »). Il peut par exemple être utile de dupliquer les informations basiques à la fin de la trame afin de réduire le temps de zapping, comme on le verra plus loin.

En présence de flux vidéo multiples, il peut être également utile que le module de traitement MT adjoigne à des paquets IP, qui représentent une trame vidéo de l'un des flux, l'identifiant de ce flux.

Il peut être également utile que le module de traitement MT adjoigne à des paquets IP des données d'information qui indiquent la politique d'insertion des données de ces paquets IP dans une rafale de « synthèse ».

Par exemple, lorsque le contenu multimédia est un fichier de données (DATA), et donc que les ensembles de données sont des segments de fichier, il est avantageux que le module de traitement MT adjoigne à un paquet IP qui représente le début ou la fin d'un segment de fichier des données d'information qui signalent ce début ou cette fin.

Il peut être également utile que le module de traitement MT adjoigne à des paquets IP qui représentent un segment de fichier des données d'information qui signalent le type des données de ce segment de fichier, c'est-à-dire s'il s'agit de données de type « DATA » et de type « FEC » (données redondantes ajoutées par une technique de correction d'erreur telle que FEC (Forward Error Correction » - technique de correction d'erreur) ou MPE-FEC dans le cas d'un réseau DVB-H.

Lorsque les données sont de type BIFS, on peut par exemple adjoindre une information de type signalant un renouvellement de scène globale (très prioritaire) ou partielle (moins prioritaire).

L'adjonction des données d'information peut se faire de deux façons.

Par exemple, le module de traitement MT peut adjoindre les données d'information aux paquets IP en les intégrant à l'intérieur d'un entête qu'ils attachent à ces derniers. Par exemple, on peut utiliser un entête défini par un protocole de signalisation tel que RTP (Real Time Protocol), en particulier dans le cas de contenus multimédia de type vidéo. En effet, le standard vidéo H.264 propose, dans le Request For Comments RFC 3984 (« RTP Payload Format for H.264 Video »), de transporter des vidéos sur RTP. Plus précisément, il est défini une couche d'abstraction appelée NAL (« Network Abstraction Layer ») qui permet de découpler l'affichage des images du transport. Par conséquent, dans le cas d'un transport au moyen de paquets , la partie réservée aux données utiles (ou « payload) du conteneur RTP contient une couche d'abstraction NAL qui permet de fournir des informations sur les données transportées. Par exemple, des NALs de types 7 (« sequence parameter set ») et 8 (« picture parameter set ») peuvent être utilisés au début d'un flux de paquets IP pour définir sa structure, ses dimensions et les outils de codage vidéo utilisés. Ensuite, des NALs de types 1 (« coded slice of a non-IDR picture ») et 5 (« coded slice of an IDR picture ») peuvent être respectivement utilisés pour signaler que des trames sont de types P/SP/B et I/SI.

En variante, le module de traitement MT peut générer une signalisation dédiée spécifiquement au transport des données d'information entre le serveur SC et l'équipement d'encapsulation EE (matérialisé par la flèche en pointillés sur l'unique figure). Dans ce cas, le serveur de contenus SC délivre sur sa sortie, par exemple en parallèle, les paquets IP générés par son module de génération MG et la signalisation correspondante générée par son dispositif de traitement D. On peut utiliser à cet effet un protocole de communication qui se présente sous la forme d'une connexion dédiée non standardisée assurant une synchronisation à 25 ms près.

Le dispositif de traitement D selon l'invention, et notamment son module de traitement MT, peut être réalisé sous la forme de modules logiciels (ou informatiques), de circuits électroniques, ou d'une combinaison de circuits et de logiciels.

Dans ce qui précède on a décrit un exemple de mise en oeuvre d'un serveur de contenus SC dans lequel le module de génération MG et le dispositif de traitement D sont dissociés. Mais, on peut envisager une variante dans laquelle le dispositif de traitement D fait partie du module de génération MG.

L'équipement d'encapsulation EE, qui reçoit les paquets IP et les données d'information correspondantes, comprend un module d'analyse MA et un module d'encapsulation ME.

Le module d'analyse MA est chargé d'analyser les données d'information qui ont été adjointes aux paquets IP reçus afin de fournir au module d'encapsulation ME les instructions nécessaires à la constitution des rafales (ici TDMA) de paquets IP, compte tenu du ou des critères d'optimisation choisis. Parmi les critères d'optimisation on peut par exemple citer le débit ou le temps de zapping.

Plus précisément, le module d'analyse MA est chargé d'ordonner au module d'encapsulation ME d'encapsuler certains au moins des paquets IP reçus dans des positions choisies au sein des rafales en fonction des données d'information qui leur correspondent et afin que tous les paquets IP qui comportent les données d'un ensemble de données soient encapsulés dans une seule rafale.

Parmi les ordres (ou instructions) que le module d'analyse MA peut adresser au module d'encapsulation ME, on peut par exemple citer les priorités de transmission entre paquets IP. Il peut en effet exister une correspondance entre certaines données d'information et des niveaux de priorité de transmission.

Par exemple, lorsque le contenu multimédia est une vidéo, on peut attribuer le niveau de priorité le plus élevé aux paquets IP des trames de type I appartenant à une couche principale, puis un niveau de priorité inférieur aux paquets IP des trames de types B et P appartenant à cette couche principale, puis un niveau de priorité encore inférieur aux paquets IP des trames de type I appartenant à une couche d'augmentation (complémentaire de la couche principale), puis un niveau de priorité encore inférieur aux paquets IP des trames des types B et P appartenant à cette couche d'augmentation.

Par exemple, lorsque le contenu multimédia est un fichier de données (DATA), on peut attribuer le niveau de priorité le plus élevé aux paquets IP des segments de fichier comportant des données de type DATA, puis un niveau de priorité inférieur aux paquets IP des segments de fichier comportant des données de type FEC (données redondantes).

Par exemple, lorsque le contenu multimédia est une scène à la norme BIFS, on peut attribuer le niveau de priorité le plus élevé aux paquets IP qui correspondent à une commande concernant une scène complète et un niveau plus faible à des paquets qui correspondent à une commande concernant une fraction de la scène.

En présence de tels niveaux de priorité, le module d'analyse MA peut ordonner au module d'encapsulation ME d'encapsuler les paquets IP dans les rafales en fonction des niveaux de priorité qui correspondent aux types de données multimédia qu'ils contiennent respectivement.

Cela peut également permettre au module d'analyse MA, lorsque tous les paquets IP qui correspondent à un ensemble de données n'ont pas été intégralement reçus et que ces paquets IP sont ceux qui sont associés au niveau de priorité le plus élevé parmi les paquets IP reçus, d'ordonner au module d'encapsulation ME d'encapsuler d'autres paquets IP précédemment reçus, qui définissent conjointement l'intégralité d'un autre ensemble de données associé à un niveau inférieur. On optimise ainsi le remplissage de la rafale en cours de constitution et les paquets IP associés à un niveau de priorité supérieur ne seront transmis au mieux que lors de la rafale suivante (s'ils sont tous arrivés). Cela est tout particulièrement vrai lorsque l'on est certain que les données prioritaires vont passer entièrement dans la rafale suivante, ce qui nécessite d'avoir une idée relativement précise de la taille des données prioritaires, sauf si l'on décide de limiter la taille de la rafale pour faire passer d'autres données sur d'autres rafales.

Cela peut également permettre au module d'analyse MA, lorsque l'intégralité du groupe de paquets IP correspondant à un ensemble de données prioritaire a été reçu mais qu'il n'y a pas suffisamment de place dans la rafale qui est en cours de constitution pour intégrer l'intégralité de ce groupe, d'ordonner au module d'encapsulation ME d'extraire de cette rafale en cours de constitution un ou plusieurs paquets IP (voire même tous) pour libérer la place nécessaire à l'intégration des paquets IP du groupe prioritaire.

Dans ce cas, le module d'analyse MA peut également ordonner au module d'encapsulation ME soit de différer la transmission des paquets IP extraits, soit de supprimer tout ou partie des paquets IP extraits.

L'extraction en vue d'une transmission différée concerne notamment, mais pas exclusivement, les données redondantes de correction d'erreur. Mais, ce différé peut également permettre au module d'analyse MA, lorsque l'intégralité du groupe de paquets IP correspondant à un ensemble de données prioritaire a été reçu mais qu'il n'y a pas suffisamment de place dans la rafale qui est en cours de constitution pour intégrer l'intégralité de ce groupe, d'ordonner au module d'encapsulation ME d'agrandir la taille de la rafale afin de pouvoir loger l'ensemble des données prioritaires. Cela est notamment utile dans un contexte d'application à encodage variable qui permet de gagner en performance de débit.

Par ailleurs, lorsque le module d'analyse MA s'aperçoit que le nombre de paquets IP à encapsuler qui définissent chaque ensemble de données diminue, ou bien que le débit de groupes de paquets IP à encapsuler diminue, il peut ordonner au module d'encapsulation ME de réduire temporairement la taille des rafales (c'est-à-dire le nombre de paquets IP encapsulés qu'elles contiennent). C'est notamment utile dans le contexte d'un encodage à débit variable, étant donné qu'il est avantageux de mettre en oeuvre cette fonction lorsque l'on reçoit plusieurs flux en parallèle (gain statistique).

Lorsque la durée d'une rafale ne peut pas être modifiée et que le nombre de paquets IP des groupes qui représentent les ensembles de données ne permet pas que chaque groupe soit encapsulé dans une même rafale compte tenu des données redondantes (FEC) correspondantes qui l'accompagne, le module d'analyse MA peut ordonner au module d'encapsulation ME de réduire le nombre total de paquets IP (ceux du groupe et ceux de redondance) afin d'adapter en quelque sorte le nombre de paquets IP définissant chaque ensemble de données (une fois encapsulés) en fonction de la durée de la rafale.

Une telle adaptation peut par exemple se faire en réduisant le niveau de correction d'erreur qui est appliqué aux paquets IP à encapsuler par le module d'encapsulation ME au moyen d'une technique de correction d'erreur de type FEC ou MPE-FEC. Il est en effet rappelé que plus le niveau de correction d'erreur est élevé, plus le nombre de données redondantes à ajouter aux paquets IP à diffuser est important.

Lorsque la taille des rafales le permet, le module d'analyse MA peut ordonner au module d'encapsulation ME d'augmenter le niveau de correction d'erreur qu'il applique aux paquets IP encapsulés.

L'augmentation, comme la réduction, du niveau de correction d'erreur peut se faire de façon dynamique, de préférence dans les limites d'un seuil choisi.

La variation du niveau de correction d'erreur peut être la même pour tous les paquets IP à encapsuler, quel que soit leur niveau de priorité associé.

En variante, cette variation peut également se faire de façon sélective, par exemple en fonction du niveau de priorité qui est associé aux paquets IP à encapsuler. Par exemple, le module d'analyse MA peut ordonner au module d'encapsulation ME d'appliquer le niveau de correction d'erreur le plus élevé aux paquets IP qui sont associés au niveau de priorité le plus élevé, et un ou plusieurs niveaux de correction d'erreur moins élevé aux paquets IP qui sont associés au(x) niveau(x) de priorité inférieur(s). Ainsi, le module d'encapsulation ME peut appliquer aux paquets IP contenant des données de type DATA un niveau de correction d'erreur plus élevé que celui qu'il applique aux paquets IP contenant des données de type FEC. De même, le module d'encapsulation ME peut appliquer aux paquets IP contenant des données d'une trame I un niveau de correction d'erreur plus élevé que celui qu'il applique aux paquets IP contenant des données d'une trame P ou B. Le même type de variation peut également se faire entre des trames d'une couche principale et des trames d'une couche d'augmentation correspondant à cette couche principale, ou bien entre des commandes BIFS.

Enfin, lorsqu'une rafale comprend suffisamment de place pour insérer l'intégralité des paquets IP correspondant à un ensemble de données, le module d'analyse MA peut être également chargé d'ordonner au module d'encapsulation ME de commencer par placer en tête de rafale les paquets IP qui contiennent les données de l'ensemble, puis de placer après les paquets IP qui contiennent les données de type FEC (données redondantes introduites par une technique de correction d'erreur).

Lorsque tous les paquets IP qui correspondent à un ensemble de données ont été intégralement reçus, que ces paquets IP sont ceux qui sont associés au niveau de priorité le plus élevé parmi les paquets IP reçus et qu'ils doivent être dupliqués dans la trame à des fins d'optimisation (de temps de zapping), le module d'analyse MA peut ordonner au module d'encapsulation ME d'encapsuler ces paquets IP précédemment reçus dans une rafale dédiée avec d'autres paquets IP de même nature (ou de même catégorie, c'est-à-dire présentant des NALs comportant un même type de trame et un même type de couche (principal ou augmenté)). On regroupe ainsi les paquets IP nécessaires à l'optimisation du temps de zapping en plaçant la rafale à la fin de la trame.

Certains paquets IP des premières rafales d'une trame peuvent ainsi être dupliqués et regroupés en fin de trame. Par exemple, en présence de trames constituées de dix rafales de données, on prévoit une onzième rafale constituée de la duplication de certaines informations contenues dans certaines au moins des dix rafales « intermédiaires ».

Ainsi, un terminal qui change de canal de contenu n'a qu'à attendre une fraction de la durée de la trame avant de retrouver une trame de type I, même de qualité basique (par opposition à améliorée (ou augmentée). L'utilisateur dispose alors d'informations minimales pour démarrer l'affichage sur l'écran de son terminal. Cela se fait au détriment de la capacité de transmission et peut être considéré comme un service supplémentaire.

Toutes les différentes actions, décrites ci-avant et ordonnées par le module d'analyse MA, compte tenu des données d'information adjointes aux paquets IP, permettent ainsi d'optimiser la position d'un ensemble de données (ou ADU) ou le débit des ensembles de données (ou ADU) dans un canal de transmission (par exemple DVB-H) ou la qualité de service (QoS) dans un canal de transmission (par exemple DVB-H) ou encore la capacité de transmission (nombre de canaux vidéo).

Le module d'analyse MA et/ou le module d'encapsulation ME de l'équipement d'encapsulation EE selon l'invention, peu(ven)t être réalisés sous la forme de modules logiciels (ou informatiques), de circuits électroniques, ou d'une combinaison de circuits et de logiciels.

L'invention ne se limite pas aux modes de réalisation de dispositif de traitement D, de serveur de contenus multimédia SC et d'équipement d'encapsulation EE décrits ci-avant, seulement à titre d'exemple, mais elle englobe toutes les variantes que pourra envisager l'homme de l'art dans le cadre des revendications ci-après.

## Revendications

1. Equipement d'encapsulation IP (EE), comprenant des moyens d'encapsulation (ME) agencés pour encapsuler dans des rafales des paquets IP, représentant des ensembles de données multimédia et délivrés par au moins un serveur de contenus multimédia (SC) propre à générer des flux continus d'ensembles de données sous forme de paquets IP et comprenant un dispositif de traitement (D) desdits paquets IP, lesdits paquets IP comprenant chacun des données de début et de fin et associés chacun au moins à un type, le dispositif de traitement comprenant des moyens de traitement (MT) agencés pour adjoindre auxdits paquets IP des données d'information définissant au moins partiellement l'ensemble de données qui est intégré dans ces paquets IP et/ou le contenu dont fait partie ledit ensemble de données et/ou des informations relatives à la transmission dudit contenu et exploitables par le réseau, de sorte que ledit serveur (SC) puisse délivrer sur une sortie lesdits paquets IP et les données d'information correspondantes, en vue de leur diffusion vers des équipements de réception (EC, RC) via un réseau de communication (RD), comprenant des moyens d'analyse (MA) agencés pour analyser les données d'information adjointes à des paquets IP reçus de manière à ordonner audits moyens d'encapsulation (ME) d'encapsuler certains au moins desdits paquets IP dans des positions choisies au sein des rafales en fonction des données d'information correspondantes et de sorte que tous les paquets IP comportent les données d'un ensemble soient encapsulés dans une seule rafale.

2. Equipement selon la revendication 1, **caractérisé en ce que** lesdits moyens d'analyse (MA) sont agencés pour établir des priorités de transmission entre paquets. IP en fonction des données d'information correspondantes et pour ordonner auxdits moyens d'encapsulation (ME) d'encapsuler les paquets IP en fonction desdites priorités établies.

3. Equipement selon l'une des revendications 1 et 2, **caractérisé en ce que** lesdits moyens d'analyse (MA) sont agencés, en cas d'indisponibilité de l'intégralité des paquets IP correspondant à un ensemble de données associé à une priorité donnée, pour ordonner auxdits moyens d'encapsulation (ME) d'encapsuler des paquets IP correspondant à un ensemble de données associé à une priorité inférieure.

4. Equipement selon l'une des revendications 1 .et 2, **caractérisé en ce que** lesdits moyens d'analyse (MA) sont agencés, en cas de disponibilité de l'intégralité des paquets IP correspondant à un ensemble de données, mais d'un manque de place dans une rafale en cours de constitution par lesdits moyens d'encapsulation (ME) et partiellement remplie de paquets IP, pour ordonner audits moyens d'encapsulation (ME) d'extraire de ladite rafale en cours de constitution certains au moins des paquets IP déjà intégrés de manière à intégrer dans ladite rafale en cours de constitution ladite intégralité des paquets IP correspondant audit ensemble de données, et de différer la transmission des paquets IP extraits.

5. Equipement selon la revendication 4, **caractérisé en ce que** lesdits moyens d'analyse (MA) sont agencés pour ordonner auxdits moyens d'encapsulation (ME) d'extraire et de différer la transmission des paquets IP contenant des données redondantes de correction d'erreur.

6. Equipement selon l'une des revendication 1 à 5, **caractérisé en ce que** lesdits moyens d'analyse (MA) sont agencés pour ordonner auxdits moyens d'encapsulation (ME) de réduire temporairement la taille des rafales.

7. Equipement selon l'une des revendication 1 à 5, **caractérisé en ce que** lesdits moyens d'analyse (MA) sont agencés pour ordonner auxdits moyens d'encapsulation (ME) d'augmenter temporairement la taille des rafales.

8. Equipement selon l'une des revendications 1 et 5, **caractérisé en ce que** lesdits moyens d'analyse (MA) sont agencés, en cas de disponibilité de l'intégralité des paquets IP correspondant à un ensemble de données, mais d'un manque de place dans une rafale en cours de constitution par lesdits moyens d'encapsulation (ME) et partiellement remplie de paquets IP, pour ordonner auxdits moyens d'encapsulation (ME) de supprimer de ladite rafale en cours de constitution certains au moins des paquets IP déjà intégrés et/ou de réduire un niveau de correction d'erreur appliqué auxdits paquets IP encapsulés et/ou d'augmenter temporairement la taille des rafales, de manière à intégrer dans ladite rafale en cours de constitution ladite intégralité des paquets IP correspondant audit ensemble de données.

9. Equipement selon l'une des revendication 1 à 8, **caractérisé en ce que** lesdits moyens d'analyse (MA) sont agencés pour ordonner auxdits moyens d'encapsulation (ME) d'augmenter le niveau de correction d'erreur appliqué auxdits paquets IP encapsulés.

10. Equipement selon la revendication 9, **caractérisé en ce que** lesdits moyens d'analyse (MA) sont agencés pour ordonner auxdits moyens d'encapsulation (ME) d'augmenter de façon dynamique le niveau de correction d'erreur appliqué auxdits paquets IP encapsulés jusqu'à un seuil choisi.

11. Equipement selon l'une des revendications 2 à 8, **caractérisé en ce que** lesdits moyens d'analyse (MA) sont agencés pour ordonner audits moyens d'encapsulation (ME) d'appliquer aux paquets IP encapsulés dans une rafale un niveau de correction d'erreur qui varie en fonction des priorités qui leur sont associées.

12. Equipement selon l'une des revendication 2 à 8, **caractérisé en ce que** lesdits moyens d'analyse (MA) sont agencés pour ordonner auxdits moyens d'encapsulation (ME) d'appliquer le niveau de correction d'erreur le plus élevé aux paquets IP qui sont associés à la priorité la plus élevée.

13. Equipement selon l'une des revendication 2 à 12, **caractérisé en ce que** lesdits moyens d'analyse (MA) sont agencés pour ordonner auxdits moyens d'encapsulation (ME) de dupliquer des données, appartenant à certaines rafales définissant un même contenu et correspondant à une même catégorise, afin de les regrouper au sein d'une même rafale définissant ledit contenu et associée à ladite catégorie.

## Claims

1. An IP encapsulation device (EE), comprising encapsulation means (ME) operative to encapsulate into bursts of IP packets, representing sets of multimedia data and delivered by at least one multimedia content server (SC) capable of generating continuous streams of data sets in the form of IP packets and comprising an apparatus (D) for processing said IP packets, said IP packets each comprising start data and end data and each associated with at least one type, the processing apparatus comprising processing means (MT) operative to add to said IP packets information data that at least partially defines the data set that is integrated into those IP packets and/or the content that said data set belongs to and/or information related to the transmission of said content and usable by the network, so that said server (SC) can deliver at an output said IP packets and the corresponding information data, in view of broadcasting them to reception devices (EC, RC) via a communication network (RD), comprising analysis means (MA) operative to analyze the information data added to received IP packets so as to order said encapsulation means (ME) to encapsulate at least some of said IP packets in chosen positions within the bursts based on corresponding information data and so that all the IP packets that comprise the data of a set are encapsulated within a single burst.

2. A device according to claim 1, **characterized in that** said analysis means (MA) are operative to establish transmission priorities between IP packets based on the corresponding information data and to order said encapsulation means (ME) to encapsulate the IP packets based on said established priorities.

3. A device according to one of the claims 1 and 2, **characterized in that** said analysis means (MA) are operative, in the event that all of the IP packets corresponding to a data set associated with a given priority are unavailable, to order said encapsulation means (ME) to encapsulate IP packets corresponding to a data set associated with a lower priority.

4. A device according to one of the claims 1 and 2, **characterized in that** said analysis means (MA) are operative, in the event that the totality of the IP packets corresponding to a data set are available, but there is not enough room within a burst being put together by said encapsulation means (ME) and partially filled with IP packets, to order said encapsulation means (ME) to extract from said burst being put together at least some of the already-integrated IP packets, so as to integrate into said burst being put together all of said totality of IP packets corresponding to said data set, and to delay the transmission of the extracted IP packets.

5. A device according to claim 4, **characterized in that** said analysis means (MA) are operative to order said encapsulation means (ME) to extract and delay the transmission of IP packets containing redundant error correction data.

6. A device according to one of the claims 1 to 5, **characterized in that** said analysis means (MA) are operative to order said encapsulation means (ME) to temporarily decrease the size of the bursts.

7. A device according to one of the claims 1 to 5, **characterized in that** said analysis means (MA) are operative to order said encapsulation means (ME) to temporarily increase the size of the bursts.

8. A device according to one of the claims 1 and 5, **characterized in that** said analysis means (MA) are operative, in the event that the totality of the IP packets corresponding to a data set are available, but there is not enough room within a burst being put together by said encapsulation means (ME) and partially filled with IP packets, to order said encapsulation means (ME) to delete from said burst being put together at least some of the already-integrated IP packets and/or to decrease an error correction level applied to said encapsulated IP packets and/or to temporarily increase the size of the bursts, so as to integrate into said burst being put together said totality of IP packets corresponding to said data set.

9. A device according to one of the claims 1 to 8, **characterized in that** said analysis means (MA) are operative to order said encapsulation means (ME) to increase the error correction level applied to said encapsulated IP packets.

10. A device according to claim 9, **characterized in that** said analysis means (MA) are operative to order said encapsulation means (ME) to dynamically increase the error correction level applied to said encapsulated IP packets until a chosen threshold is reached.

11. A device according to one of the claims 2 to 8, **characterized in that** said analysis means (MA) are operative to order said encapsulation means (ME) to apply to the IP packets encapsulated within a burst an error correction level that varies based on the priorities associated with them.

12. A device according to one of the claims 2 to 8, **characterized in that** said analysis means (MA) are operative to order said encapsulation means (ME) to apply the highest error correction level to the IP packets that are associated with the highest priority.

13. A device according to one of the claims 2 to 12, **characterized in that** said analysis means (MA) are operative to order said encapsulation means (ME) to duplicate data belonging to certain bursts that define the same piece of content and correspond to the same category, in order to group them within a single burst defining said content and associated with said category.

## Patentansprüche

1. IP-Verkapselungsvorrichtung (EE), umfassend Verkapselungsmittel (ME), die dazu ausgelegt sind, IP-Pakete, welche Sätze von Multimediadaten darstellen und von mindestens einem Multimediainhalt-Server (SC), der fähig ist, kontinuierliche Ströme von Sätzen von Daten in der Form von IP-Paketen zu erzeugen und eine Vorrichtung zur Verarbeitung (D) der besagten IP-Pakete umfasst, bereitgestellt werden, in Bursts zu verkapseln, wobei die besagten IP-Pakete jeweils Anfangs- und Ende-Daten, welche jeweils mit mindestens einem Typ assoziiert sind, enthalten, wobei die Verarbeitungsvorrichtung Verarbeitungsmittel (MT) umfasst, die dazu ausgelegt sind, den besagten IP-Paketen Informationsdaten beizufügen, welche zumindest zum Teil den Satz von Daten, der in diesen IP-Paketen integriert ist, und/oder den Inhalt, von welchem der besagte Satz von Daten einen Teil bildet, und/oder Informationen in Bezug auf die Übertragung des besagten Inhalts, welche von dem Netzwerk ausgewertet werden können, definieren, so dass der besagte Server (SC) die besagten IP-Pakete und die entsprechenden Informationsdaten an einem Ausgang bereitstellen kann, um diese über ein Kommunikationsnetzwerk (RD) an Empfangsvorrichtungen (EC, RC) zu senden, wobei das besagte Kommunikationsnetzwerk (RD) Analysemittel (MA) umfasst, die dazu ausgelegt sind, die den empfangenen IP-Paketen beigefügten informationsdaten zu analysieren, um den besagten Verkapselungsmitteln (ME) zu befehlen, zumindest bestimmte der besagten IP-Pakete in ausgewählten Positionen innerhalb der Bursts in Abhängigkeit von den entsprechenden Informationsdaten zu verkapseln, so dass alle IP-Pakete, die die Daten eines Satzes enthalten, in einem einzigen Burst verkapselt werden.

2. Vorrichtung nach Anspruch 1, **dadurch gekennzeichnet, dass** die besagten Analysemittel (MA) dazu ausgelegt sind, Übertragungsprioritäten zwischen IP-Paketen in Abhängigkeit von den entsprechenden Informationsdaten festzulegen und den besagten Verkapselungsmitteln (ME) zu befehlen, die IP-Pakete in Abhängigkeit von den besagten festgelegten Prioritäten zu verkapseln.

3. Vorrichtung nach einem der Ansprüche 1 und 2, **dadurch gekennzeichnet, dass** die besagten Analysemittel (MA) dazu ausgelegt sind, im Fall der Nichtverfügbarkeit der Gesamtheit der IP-Pakete, die einem einer gegebenen Priorität zugeordneten Satz von Daten entsprechen, den besagten Verkapselungsmitteln (ME) zu befehlen, IP-Pakete, die einem einer niedrigeren Priorität zugeordneten Satz von Daten entsprechen, zu verkapseln.

4. Vorrichtung nach einem der Ansprüche 1 und 2, **dadurch gekennzeichnet, dass** die besagten Analysemittel (MA) dazu ausgelegt sind, im Fall der Verfügbarkeit der Gesamtheit der IP-Pakete, die einem Satz von Daten entsprechen, jedoch eines Platzmangels in einem durch die besagten Verkapselungsmittel (ME) in Aufbau befindlichen und zum Teil mit IP-Paketen gefüllten Burst, den besagten Verkapselungsmitteln (ME) zu befehlen, zumindest bestimmte der schon eingefügten IP-Pakete aus dem besagten in Aufbau befindlichen Burst zu extrahieren, um die besagte Gesamtheit der IP-Pakete, die dem besagten Satz von Daten entsprechen, in den besagten in Aufbau befindlichen Burst einzufügen und die Übertragung der extrahierten IP-Pakete aufzuschieben.

5. Vorrichtung nach Anspruch 4, **dadurch gekennzeichnet, dass** die besagten Analysemittel (MA) dazu ausgelegt sind, den besagten Verkapselungsmitteln (ME) zu befehlen, IP-Pakete, welche redundante Fehlerkorrekturdaten enthalten, zu extrahieren und deren Übertragung aufzuschieben.

6. Vorrichtung nach einem der Ansprüche 1 bis 5, **dadurch gekennzeichnet, dass** die besagten Analysemittel (MA) dazu ausgelegt sind, den besagten Verkapselungsmitteln (ME) zu befehlen, die Größe der Bursts vorübergehend zu reduzieren.

7. Vorrichtung nach einem der Ansprüche 1 bis 5, **dadurch gekennzeichnet, dass** die besagten Analysemittel (MA) dazu ausgelegt sind, den besagten Verkapselungsmitteln (ME) zu befehlen, die Größe der Bursts vorübergehend zu erhöhen.

8. Vorrichtung nach einem der Ansprüche 1 und 5, **dadurch gekennzeichnet, dass** die besagten Analysemittel (MA) dazu ausgelegt sind, im Fall der Verfügbarkeit der Gesamtheit der einem Satz von Daten entsprechenden IP-Pakete, jedoch eines Platzmangels in einem von den besagten Verkapselungsmitteln (ME) in Aufbau befindlichen und zum Teil mit IP-Paketen gefüllten Burst, den besagten Verkapselungsmitteln (ME) zu befehlen, zumindest bestimmte der schon integrierten IP-Pakete aus dem besagten in Aufbau befindlichen Burst zu entfernen und/oder eine für die besagten verkapselten IP-Pakete angewendete Fehlerkorrekturstufe zu reduzieren und/oder die Größe der Bursts vorübergehend zu erhöhen, um die besagte Gesamtheit der dem besagten Satz von Daten entsprechenden IP-Pakete in den besagten in Aufbau befindlichen Burst zu integrieren.

9. Vorrichtung nach einem der Ansprüche 1 bis 8, **dadurch gekennzeichnet, dass** die besagten Analysemittel (MA) dazu ausgelegt sind, den besagten Verkapselungsmitteln (ME) zu befehlen, die für die besagten verkapselten IP-Pakete angewendete Fehlerkorrekturstufe zu erhöhen.

10. Vorrichtung nach Anspruch 9, **dadurch gekennzeichnet, dass** die besagten Analysemittel (MA) dazu ausgelegt sind, den besagten Verkapselungsmitteln (ME) zu befehlen, die für die besagten verkapselten IP-Pakete angewendete Fehlerkorrekturstufe dynamisch bis zu einem gewählten Grenzwert zu erhöhen.

11. Vorrichtung nach einem der Ansprüche 2 bis 8, **dadurch gekennzeichnet, dass** die besagten Analysemittel (MA) dazu ausgelegt sind, den besagten Verkapselungsmitteln (ME) zu befehlen, für die in einem Burst verkapselten IP-Pakete eine Fehlerkorrekturstufe anzuwenden, welche in Abhängigkeit von den ihnen zugeordneten Prioritäten variiert.

12. Vorrichtung nach einem der Ansprüche 2 bis 8, **dadurch gekennzeichnet, dass** die besagten Analysemittel (MA) dazu ausgelegt sind, den besagten Verkapselungsmitteln (ME) zu befehlen, für die der höchsten Priorität zugeordneten IP-Pakete die höchste Fehlerkorrekturstufe anzuwenden.

13. Vorrichtung nach einem der Ansprüche 2 bis 12, **dadurch gekennzeichnet, dass** die besagten Analysemittel (MA) dazu ausgelegt sind, den besagten Verkapselungsmitteln (ME) zu befehlen, Daten, die bestimmten Bursts, welche einen selben Inhalt definieren und einer selben Kategorie entsprechen, angehören, zu duplizieren, um diese in einem selben Burst, welcher den besagten Inhalt definiert und mit derselben Kategorie assoziiert ist, zusammenzufassen.
